# FASCICULE DE BREVET EUROPEEN

(11) **EP 3 712 551 B1**
(45) Date de publication et mention de la délivrance du brevet: **30.11.2022**
(21) Numéro de dépôt: 20158972.8
(22) Date de dépôt: 24.02.2020
(51) Int. Cl.: F41G 3/02, F41G 3/16, F41G 3/22, G01S 5/16, G06K 9/00, G06T 7/33

(54) **PROCÉDÉ DE POINTAGE ET D'ACQUISITION DE CIBLE POUR UNE PLATEFORME, NACELLE ET DISPOSITIF PERMETTANT LA MISE EN OEUVRE DE CE PROCÉDÉ**
VERFAHREN ZUR ZIELERFASSUNG UND AUSRICHTUNG FÜR EINE PLATTFORM, GONDEL UND VORRICHTUNG ZUR UMSETZUNG DIESES VERFAHRENS
METHOD FOR TARGETING AND ACQUIRING A TARGET FOR A PLATFORM, NACELLE AND DEVICE ENABLING THE IMPLEMENTATION OF SAID METHOD

(30) Priorité: 21.03.2019 FR 1902836
(43) Date de publication de la demande: 23.09.2020
(73) Titulaire: NEXTER Systems, 78034 Versailles Cedex (FR)
(72) Inventeur: BRUNEAU, Philippe, 18023 Bourges (FR)
(74) Mandataire: Cabinet Chaillot

(56) Documents cités:
- EP-A1- 3 151 031
- US-A1- 2017 364 095
- US-A1- 2018 150 970

## Description

Le domaine technique de l'invention est celui des procédés et des dispositifs de pointage et d'acquisition d'une cible par une plateforme, telle qu'un véhicule.

Il est classique de doter les véhicules terrestres, par exemple les chars, d'un dispositif de pointage et d'acquisition de cible, par exemple un viseur panoramique incorporant un désignateur laser.

Ces dispositifs sont cependant limités à une acquisition de cibles qui sont en intervisibilité avec le véhicule.

Ils ne permettent pas l'acquisition de cibles situées en dehors du champ de vision de la plateforme.

Il a été proposé de mettre en œuvre des drones ou engins volants télécommandés (UAV) pour améliorer la visibilité des plateformes terrestres.

Le brevet EP0148704 décrit ainsi un drone équipé de caméra et de moyens de navigation. Cet engin peut localiser une cible en mettant en œuvre des données cartographiques mises en mémoire qui lui permettent de localiser une cible sur la carte ainsi mémorisée.

Il est cependant coûteux de stocker de telles données cartographiques qui par ailleurs peuvent être inexistantes ou obsolètes lors d'une mise en œuvre en zone de conflit. Les repères, routes ou infrastructures peuvent en effet se trouver détruits, rendant plus difficile la localisation d'une cible.

Il a été également proposé de doter les drones de moyens permettant de localiser une cible, par exemple des systèmes de positionnement par satellite (ou GPS) couplés à des moyens de télémètrie laser.

Cependant les systèmes GPS sont susceptibles d'être brouillés et rendus inutilisables sur un théâtre d'opérations et les moyens de localisation optique et les centrales inertielles sont des équipements fragiles, coûteux et détectables.

Le brevet européen EP3151031 et les brevets américains US 2017/364095 et US 2018/150970 A1 décrivent des procédés de pointage et d'acquisition de cible pour une plateforme.

Le procédé selon EP3151031 met en œuvre un mât fixe et télescopique, et non un drone à voilure tournante. En outre, ces procédés ne comprennent pas le calcul de la pose ou attitude d'une caméra montée sur un drone vis-à-vis d'une plateforme par des moyens optiques tel que défini dans la revendication 1, notamment en déterminant la pose par comparaison de la géométrie de la plateforme avec au moins un modèle numérique en trois dimensions de cette plateforme, qui a été mis dans une mémoire d'un moyen de calcul afin de réaliser une désignation de cible avec transfert de référentiel.

C'est le but de l'invention que de proposer un procédé, une nacelle et un dispositif de pointage et d'acquisition de cible qui soient rustiques, peu coûteux et qui ne mettent pas en œuvre de systèmes de positionnement par satellite.

Ainsi l'invention a pour objet un procédé de pointage et d'acquisition de cible pour une plateforme, procédé caractérisé en ce que :
- on met en œuvre au moins un drone à voilure tournante, équipé d'une nacelle portant un dispositif d'acquisition qui est orientable en site et gisement par rapport au drone, le dispositif d'acquisition comportant une caméra de pointage qui peut être orientée vers une cible lors de l'orientation du dispositif d'acquisition, drone et dispositif d'acquisition étant commandés à partir de la plateforme ;
- on effectue au moins un pointage d'une cible à partir de la caméra de pointage ;
- on détermine la pose c'est-à-dire la localisation et l'orientation des axes d'un repère lié au dispositif d'acquisition, dit repère de visée Rv, dans un repère de référence lié à la plateforme ;
- la pose étant déterminée à l'aide d'un moyen d'observation raccordé à un moyen de calcul, le moyen d'observation étant lié rigidement à la caméra de pointage et assurant une observation de l'espace avec une couverture angulaire de sensiblement 360° autour d'un axe de pointage de la caméra de pointage, le moyen d'observation permettant d'observer la plateforme au cours du pointage de la caméra de pointage, la pose étant déterminée par comparaison de la géométrie de la plateforme avec au moins un modèle numérique en trois dimensions de cette plateforme, qui a été mis dans une mémoire du moyen de calcul ;
- on transmet à la plateforme à partir du drone la ou les poses du dispositif d'acquisition associées aux vidéos de pointage de la cible.

Selon un mode de réalisation, on pourra localiser la cible le long de la ou des directions de pointage par une opération de télémétrie réalisée à l'aide d'un télémètre solidaire du dispositif d'acquisition.

Selon un autre mode de réalisation plus particulièrement avantageux, on pourra localiser la cible le long de la ou des directions de pointage par au moins une opération de triangulation.

Selon un mode de réalisation, on pourra réaliser au moins une triangulation en donnant au moins deux positions successives au drone, en réalisant un pointage de cible pour chaque position et en envoyant à la plateforme et pour chaque position la pose du dispositif d'acquisition dans le repère plateforme, pose qui a été adoptée lors du pointage de cible considéré.

Selon un autre mode de réalisation, on pourra mettre en œuvre au moins deux drones à voilures tournantes, équipés chacun d'une nacelle portant un dispositif d'acquisition de cible et dans ce procédé :
- on pointe la cible à partir d'un premier drone, puis on transmet à la plateforme la pose du premier dispositif d'acquisition dans le repère de la plateforme ;
- on pointe la même cible à partir d'un deuxième drone, puis on transmet à la plateforme la pose du deuxième dispositif d'acquisition dans le repère de la plateforme ;
- on réalise une triangulation permettant de localiser la cible à partir des deux pointages de cible ainsi réalisés.

Selon une variante de ce dernier mode de réalisation, des moyens de poursuite de cible pourront être intégrés à au moins un des drones, permettant le pointage d'une cible par un seul utilisateur pilotant les deux drones.

Avantageusement, pour faciliter les opérations de pointage on pourra afficher en temps réel sur une interface Homme Machine la ligne de visée d'un premier pointage réalisé.

L'invention a également pour objet une nacelle de pointage et d'acquisition de cible permettant la mise en œuvre du procédé selon l'invention, nacelle qui est destinée à être liée à une drone à voilure tournante et comportant un dispositif d'acquisition qui est destiné à pouvoir être orienté en site et en gisement par rapport au drone, le dispositif d'acquisition comportant au moins une caméra de pointage qui peut être orientée vers une cible lors de l'orientation du dispositif d'acquisition, le dispositif d'acquisition comportant également un moyen d'observation, lié rigidement à la caméra de pointage, et raccordé à un moyen de calcul, moyen d'observation assurant une observation de l'espace avec une couverture angulaire de sensiblement 360° autour d'un axe de pointage de la caméra de pointage, le moyen d'observation étant destiné à observer la plateforme au cours du pointage de la caméra de pointage, la géométrie de la plateforme étant destinée à être comparée à au moins un modèle numérique en trois dimension de cette plateforme qui a été mis dans une mémoire du moyen de calcul, pour en déduire la pose du dispositif d'acquisition, c'est-à-dire la position et l'orientation des axes d'un repère lié au dispositif d'acquisition, dit repère de visée Rv, dans le repère associé à la plateforme, nacelle comportant également des moyens permettant de transmettre à la plateforme les vidéos issues de la caméra de pointage et les informations de pose associées.

Selon des modalités d'exécution particulières, la nacelle pourra comporter un plateau permettant sa fixation à un drone, plateau relié à un corps par un premier moteur, le corps étant relié au dispositif d'acquisition par un deuxième moteur.

Avantageusement, le modèle numérique de plateforme pourra être un modèle articulé associant les modèles numériques d'au moins deux sous-ensembles de la plateforme, chaque sous-ensemble pouvant être orienté dans l'espace par rapport à l'autre sous-ensemble, l'orientation relative des différents sous-ensembles étant destinée à être transmise à la nacelle par la plateforme.

Selon un mode de réalisation, la nacelle pourra comporter un télémètre solidaire du dispositif d'acquisition.

L'invention a enfin également pour objet un dispositif de pointage et acquisition de cible permettant la mise en œuvre du procédé selon une des caractéristiques précédemment mentionnées, dispositif qui est caractérisé en ce qu'il comporte au moins un drone à voilure tournante qui est équipé d'une nacelle selon l'invention.

Selon un mode particulier de réalisation, le dispositif de pointage et acquisition de cible pourra comporter au moins deux drones à voilures tournantes équipés chacun d'une nacelle selon l'invention, les drones et leurs dispositifs d'acquisition étant commandés à partir de la plateforme.

Avantageusement, selon ce dernier mode de réalisation, au moins une nacelle pourra être équipée d'un dispositif de poursuite de cible.

L'invention sera mieux comprise à la lecture de la description qui va suivre, description faite en référence aux dessins annexés et dans lesquels :
[Fig. 1] montre de façon schématique une nacelle portant un dispositif d'acquisition orientable et pouvant être emportée par un drone ;
[Fig. 2] représente un drone équipé d'une telle nacelle et formant une partie d'un dispositif de pointage et acquisition de cible selon l'invention ;
[Fig. 3] est une vue d'un théâtre d'opération dans lequel on met en œuvre un dispositif de pointage et acquisition de cible selon un premier mode de réalisation de l'invention ;
[Fig. 4] est une vue d'un théâtre d'opération dans lequel on met en œuvre un dispositif de pointage et acquisition de cible selon un second mode de réalisation de l'invention ;
[Fig. 5] est une représentation simplifiée d'un exemple d'interface de commande.

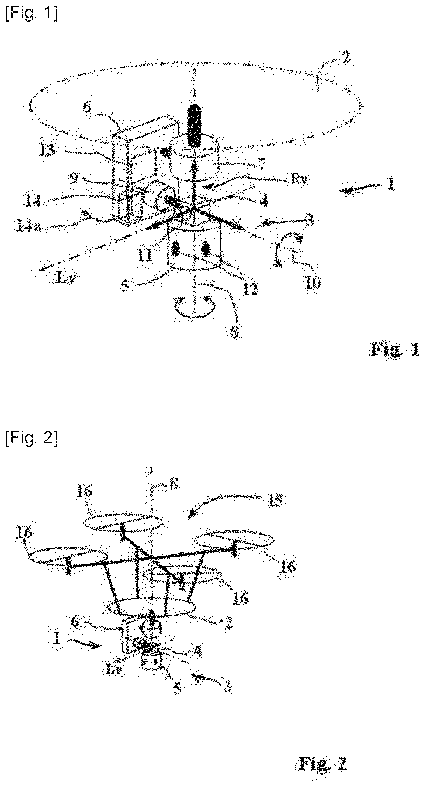

En se reportant à la figure 1, une nacelle 1 selon l'invention comporte un plateau 2 qui est destiné à être fixé à un drone, non représenté. La nacelle 1 porte un dispositif d'acquisition 3 qui comprend, d'une part une caméra de pointage 4 et d'autre part un moyen d'observation 5.

La nacelle 1 permet de réaliser l'orientation en site et en gisement (donc le pointage) du dispositif d'acquisition 3 par rapport au drone.

Pour cela la nacelle 1 comporte un corps 6 qui est relié au plateau 2 par un premier moteur 7 permettant de faire pivoter le corps 6 autour d'un axe vertical 8 pour permettre un pointage en gisement du dispositif d'acquisition 3.

Le pivotement peut être réalisé suivant 360° autour de l'axe vertical 8.

Le corps 6 porte le dispositif d'acquisition 3 par l'intermédiaire d'un second moteur 9 qui permet de faire pivoter le dispositif d'acquisition 3 autour d'un axe horizontal 10 pour permettre un pointage en site du dispositif d'acquisition 3. Le pivotement peut être réalisé suivant +/- 90° autour de l'axe horizontal 10.

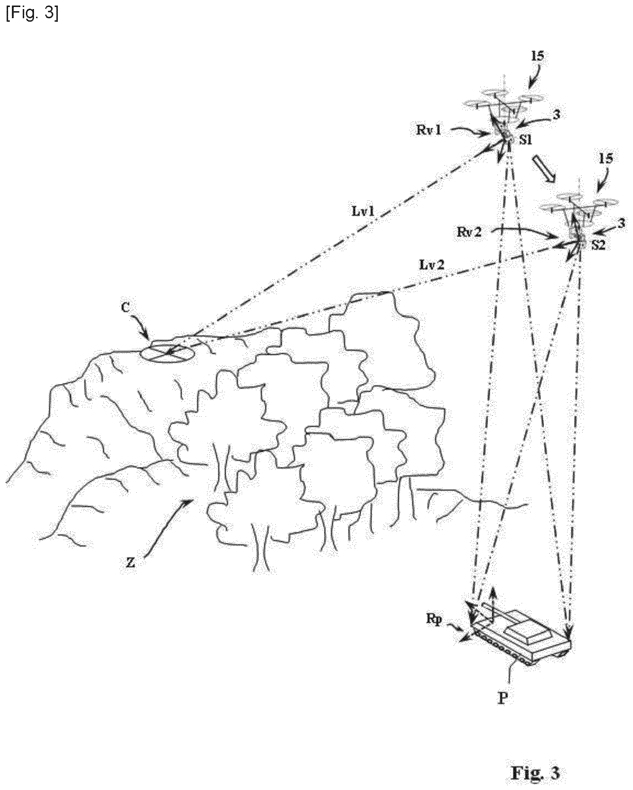

On a représenté à la figure 1 par la flèche Lv la direction d'observation de la caméra de pointage 4. En effet cette dernière comporte un objectif unique 11 qui permet de rechercher et d'observer une cible C (figure 3) disposée sur le terrain.

Le moyen d'observation 5 comprend une pluralité de caméras individuelles 12 régulièrement réparties angulairement autour de l'axe de pointage en gisement 8. Ces caméras 12 sont conformées de façon à assurer une observation de l'espace autour de la nacelle 1 avec une couverture angulaire de sensiblement 360° autour de l'axe de pointage en gisement 8.

On pourra choisir des caméras 12 à grand champ (donc à objectif grand angle) mais on pourra aussi choisir des caméras 12 ayant un angle d'objectif plus réduit, il faut alors augmenter le nombre de caméras 12 pour assurer la couverture angulaire souhaitée (360°).

Pour des raisons technologiques, cette couverture de 360° pourra n'être effective qu'à une distance donnée de la nacelle 1 (par exemple d'au moins cinq mètres). Il pourra donc exister des zones aveugles mais uniquement à proximité de la nacelle 1, les champs des caméras 12 se recoupant à distance pour assurer la couverture de 360°.

Concrètement les champs sont choisis suffisamment larges pour qu'une des caméras 12 assure toujours l'observation d'au moins une partie d'une plateforme P au sol qui commande le drone et la nacelle 1.

La caméra de pointage 4 et le moyen d'observation 5 sont reliés à des moyens de calcul 13 qui pourront être solidaires du corps 6 de la nacelle 1 ou encore solidaires du drone lui-même. Ces moyens de calcul 13 sont couplés à des moyens de communication radio 14 (dont on a schématisé une antenne 14a) qui permettent les échanges entre la nacelle 1 et la plateforme P de commande au sol, telle un véhicule.

Les moyens de calcul 13 sont constitués par un calculateur qui pourra par ailleurs assurer le pilotage des premier et second moteurs de pointage 7 et 9 en fonction des commandes reçues de la plateforme au sol.

Comme on le voit sur la figure 2, la nacelle 1 est solidaire d'un drone à voilure tournante 15. Le drone 15 qui est représenté ici est un drone à quatre rotors 16, par exemple des rotors à deux pales contrarotatives.

Le drone 15 pourrait être de nature différente, par exemple un drone à deux rotors contrarotatifs coaxiaux.

Ce qui est important c'est que, du fait de la voilure tournante, le drone puisse rester stationnaire au niveau d'un point de l'espace, que la position du drone 15 dans l'espace soit stabilisée, et que ce drone assure un maintien vertical de l'axe de pointage en gisement 8. Ainsi seuls les mouvements de pointage commandés par les moteurs 7 et 9 permettront l'orientation de la caméra de pointage 4 et du moyen d'observation 5.

Les moyens de commande du drone 15 lui-même seront portés par celui-ci. Ils pourront également être pilotés à partir du moyen de calcul 13 porté par la nacelle 1. Ainsi une seule voie hertzienne pourra assurer, par un protocole unique, le pilotage du drone 15, les commandes des moteurs de pointage 7 et 9 et les échanges vidéo entre la nacelle 1 et la plateforme P au sol.

Ainsi la nacelle 1 comporte un dispositif d'acquisition 3 qui est orientable à volonté en direction d'une cible. On associe au dispositif d'acquisition 3 un repère géométrique qui lui est lié, dit repère de visée Rv.

On a représenté sur la figure 1 ce repère de visée Rv qui a un axe (axe de roulis) confondu avec la direction de visée Lv de la caméra de pointage 4, un autre axe (axe de tangage) confondu avec l'axe de pointage en site 10 et un troisième axe (axe de lacet) perpendiculaire aux deux autres et qui est basculé de l'angle de pointage en site par rapport à l'axe vertical 8. Sur la figure 1, l'axe de lacet est positionné verticalement car la ligne de visée Lv est horizontale.

Pour repérer une cible sur le terrain il suffit, d'une part de connaître la pose, c'est-à-dire la localisation et l'orientation du repère de visée Rv dans un repère de référence, par exemple un repère Rp lié à la plateforme P qui pilote le drone 15, et de connaître également la distance Δ entre le repère de visée Rv et la cible.

Conformément au procédé selon l'invention, on effectuera donc au moins un pointage d'une cible à partir de la caméra de pointage, puis on déterminera la pose du repère de visée Rv lié au dispositif d'acquisition 3, dans un repère de référence. Enfin on transmettra à la plateforme P, à partir du drone 15, la ou les poses du dispositif d'acquisition 3 associées aux vidéos de pointage de la cible.

Selon l'invention, on utilisera le moyen d'observation 5 pour déterminer la pose du repère de visée Rv. Du fait de la liaison rigide entre la caméra de pointage 4 et le moyen d'observation 5, la connaissance de la position du moyen d'observation 5 dans l'espace entraîne également la connaissance de l'orientation de la caméra de pointage 4 et plus généralement du repère Rv dans l'espace.

En se reportant à la figure 3, on voit un drone 15 qui est piloté par une plateforme P qui est ici un char. Un servant à bord de la plateforme P pilote le drone 15. Il utilise pour ce pilotage la caméra de pointage 4 et il recherche une cible C qui est hors de vision de la plateforme P, qui se trouve masquée par une zone de forêt Z.

Le pointage du dispositif d'acquisition 3 en direction de la cible C oriente le repère de visée Rv avec un de ses axes (Lv) en direction de la cible C. A l'issue de ce pointage, le moyen d'observation 5 voit toujours la plateforme P.

On compare alors la géométrie de la plateforme P ainsi observée à au moins un modèle numérique de cette plateforme, qui a été mis dans une mémoire du moyen de calcul 13.

Des algorithmes appropriés, également mis en mémoire, permettent de transformer en temps réel les images de la plateforme P en un modèle numérique instantané de cette plateforme. Le modèle numérique de la plateforme qui est en mémoire est issu de la conception assistée par ordinateur (ou CAO) de la plateforme. C'est un modèle en trois dimensions qui n'est expurgé que des données de la plateforme qui ne sont pas visibles (formes cachées). Alternativement, en particulier si la CAO n'est pas disponible, il est possible d'utiliser un modèle numérique obtenu par une numérisation en trois dimensions de la plateforme P.

Ce modèle numérique incorpore bien sûr les éléments dimensionnels du véhicule réel, ce qui permettra de déterminer une distance entre le dispositif d'acquisition 3 et la plateforme P à partir de l'image d'un véhicule d'une taille donnée.

On procède donc à une comparaison de la géométrie de la plateforme P observée (modèle numérique instantané) avec le modèle de référence qui a été mis dans une mémoire du moyen de calcul 13.

Cette comparaison permet, à l'aide d'algorithmes de comparaison, d'en déduire tout à la fois l'orientation des axes du repère de visée Rv par rapport au repère Rp de la plateforme P (angles des axes du repère Rv dans le repère Rp) et la localisation du repère de visée Rv par rapport au repère Rp (position du centre du premier repère Rv dans le repère Rp). Le repère de visée Rv est un repère solidaire de la caméra de pointage 4 et dont l'axe de roulis est confondu avec la ligne de visée Lv de la caméra de pointage 4. Il diffère donc sensiblement du repère Rp lié à la plateforme (dont l'axe de roulis est orienté suivant l'axe longitudinal du véhicule) et il a une pose (position et localisation) par rapport au repère Rp qui dépend du pointage de cible qui est effectué par la caméra de pointage 4.

Afin de tenir compte des orientations relatives des composantes de la plateforme P sur le terrain (par exemple la tourelle par rapport au châssis), on pourra réaliser au niveau du moyen de calcul 13 un calcul dynamique tenant compte des orientations relatives de ces composants en associant, au moment de la mesure, les modèles numériques respectifs du châssis, de la tourelle et du canon avec les orientations réelles connues de ces éléments. Le modèle numérique de la plateforme P est alors un modèle articulé associant les modèles numériques d'au moins deux sous-ensembles de cette plateforme qui peuvent être orientés dans l'espace les uns par rapport aux autres.

Le moyen de calcul 13 calculera alors le modèle numérique global instantané de la plateforme P au moment du calcul de la pose du repère de visée Rv. Cette variante permet de mettre en œuvre un modèle numérique plus complet correspondant à la forme réelle de la plateforme P sur le terrain à un instant donné et donne donc une meilleure précision sur le calcul de la pose.

Cette variante imposera cependant que la plateforme P transmette au préalable au moyen de calcul 13 les orientations relatives de ses principaux éléments constitutifs (châssis, tourelle, canon). Les orientations seront bien entendu fournies dans le repère Rp de la plateforme P qui sert ici de plateforme de référence. Cette transmission et le traitement numérique qui en est fait est complètement automatique et l'utilisateur n'a pas à se préoccuper des orientations considérées lorsqu'il pilote le drone 15.

La comparaison des géométries de plateformes met en œuvre des algorithmes de comparaison d'image connus sous le nom d'algorithmes SLAM, acronyme de la dénomination anglo saxonne : Simultaneous Localization And Mapping (localisation et cartographie automatique). Ces algorithmes sont bien connus de l'Homme du Métier et il n'est pas nécessaire de les décrire en détails. On notera qu'ils procèdent à des comparaisons d'images en mettant en œuvre de techniques de filtrage (filtrage de Kalman, filtrage probalistique) afin de déterminer les modifications d'orientation des axes nécessaires pour obtenir la meilleure corrélation. Il est ainsi possible à tout moment de déterminer les coordonnées du repère de visée Rv dans le repère de la plateforme Rp et il est aussi possible de connaître les orientations des axes du repère de visée Rv par rapport aux axes du repère de la plateforme Rp.

On peut alors transmettre à la plateforme P la pose du repère de visée Rv dans le repère de la plateforme Rp, c'est-à-dire tout à la fois la localisation du centre du repère de visée Rv et les positions des axes du repère Rv. Ces informations de pose donnent directement l'orientation de la ligne de visée Lv dans le repère Rp de la plateforme.

Pour localiser la cible C, il suffit de coupler à cette information, une transmission de la distance Δ entre la caméra de pointage 4 et la cible C. On peut alors connaître les coordonnées de la cible C dans le repère de la plateforme Rp, ce qui permet à cette dernière de pointer directement la cible C en question pour réaliser un tir indirect, par exemple avec un missile, un canon ou un mortier.

Selon un mode particulier de réalisation, la distance Δ peut être déterminée par une opération de télémétrie réalisée à l'aide d'un télémètre solidaire du dispositif d'acquisition 3. Le télémètre pourra comporter une voie laser coaxiale à la ligne de visée Lv et incorporée à la caméra de pointage 4.

Suivant un mode de réalisation plus simple et moins coûteux, on pourra localiser la cible le long de la ou des directions de pointage Lv par au moins une opération de triangulation.

La figure 3 schématise un exemple de réalisation d'une telle opération de triangulation.

Suivant ce mode de réalisation, la plateforme P ne met en œuvre qu'un seul drone 15. Ce dernier pointe la cible C une première fois à la position S1 et transmet à la plateforme P les coordonnées d'une première ligne de visée Lv1 dans le repère Rp.

Le drone 15 se déplace ensuite de quelques mètres et réalise un nouveau pointage de la cible C à partir d'une deuxième position S2. Il transmet à la plateforme P les coordonnées d'une deuxième ligne de visée Lv2 dans le repère Rp.

La connaissance géométrique dans le même repère des deux lignes de visée Lv1 et Lv2 permet de déterminer les coordonnées du point d'intersection de ces deux lignes de visée c'est-à-dire celles de la cible C dans le repère Rp.

L'opération de pointage peut être ainsi très rapide et il est inutile de disposer d'un désignateur laser.

La précision de la localisation dépendra de celle du pointage effectué par l'opérateur qui devra à chaque position S1 et S2 aligner la ligne de visée Lv de la caméra de pointage sur le même point de la cible C.

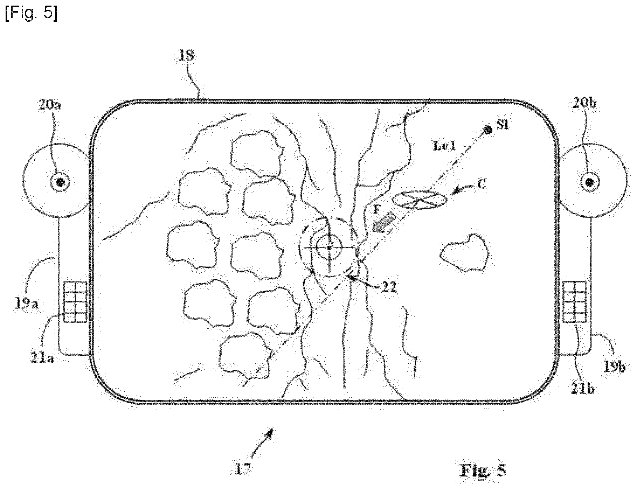

L'opérateur du drone qui est logé dans la plateforme 1 dispose d'une interface de commande 17 (ou interface homme machine). La figure 5 montre schématiquement un exemple d'interface de commande 17 qui comporte un écran 18, permettant de visualiser ce que voit la caméra de pointage 4. L'interface de commande 17 comporte aussi des poignées de maintien 19a et 19b sur chacune desquelles est disposé au moins un levier de commande 20a ou 20b permettant le pilotage du drone ainsi que des claviers de commande 21a et 21b pour activer différentes fonctions du drone ou de la nacelle.

Une telle interface de commande est classique et il n'est pas nécessaire de la décrire en détails.

Elle pourra être incorporée de façon fixe au niveau d'un poste de tir de la plateforme 1.

Conformément à une variante de l'invention on pourra définir l'interface 17 de telle sorte qu'elle affiche en temps réel sur son écran 18 la ligne de visée Lv1 du premier pointage qui a été réalisé.

Comme on le voit sur la figure 5, la cible C présente sur le terrain est visible sur l'écran 18. La plateforme P n'est pas visible car elle n'est pas dans le champ de la caméra de pointage 4.

La première ligne de visée Lv1 est rendue visible, bien que le drone se soit déplacé pour réaliser le second pointage. La première ligne de visée Lv1 s'étend dans l'espace à partir du point S1 qui correspond à la position occupée par le drone lors de la première visée et elle passe par la cible C. Le point S1 peut éventuellement ne pas être vu sur l'écran 18 en fonction de la position du drone lors du second pointage.

Cette ligne de visée Lv1 est représentée dans le repère Rv associé au drone à un instant donné et elle aura son orientation ou sa forme qui se modifieront donc sur l'écran 18 avec le déplacement du drone 15, mais le point d'intersection de Lv1 avec la cible C, tel qu'il correspond à la première visée effectuée, restera fixe par rapport à la cible C.

L'écran 18 permet aussi de visualiser un réticule de visée 22 qui est positionné au centre de l'écran 18. C'est l'image vue par la caméra de pointage 4 qui se déplace sur l'écran par rapport au réticule 22. L'opérateur peut déplacer (flèche F) la caméra de pointage 4 ou le drone 15 pour positionner la cible C sur le réticule 22 pour effectuer le second pointage.

Ce mode de réalisation permet de faciliter la seconde visée puisque le positionnement du point d'intersection de la première ligne de visée avec la cible C est visible sur l'écran, bien que les coordonnées de ce point ne soient pas connues. Il suffit donc, pour réaliser le second pointage, de positionner ce point sur le réticule 22. On améliore ainsi la précision de la localisation de la cible C dans le repère de la plateforme Rp.

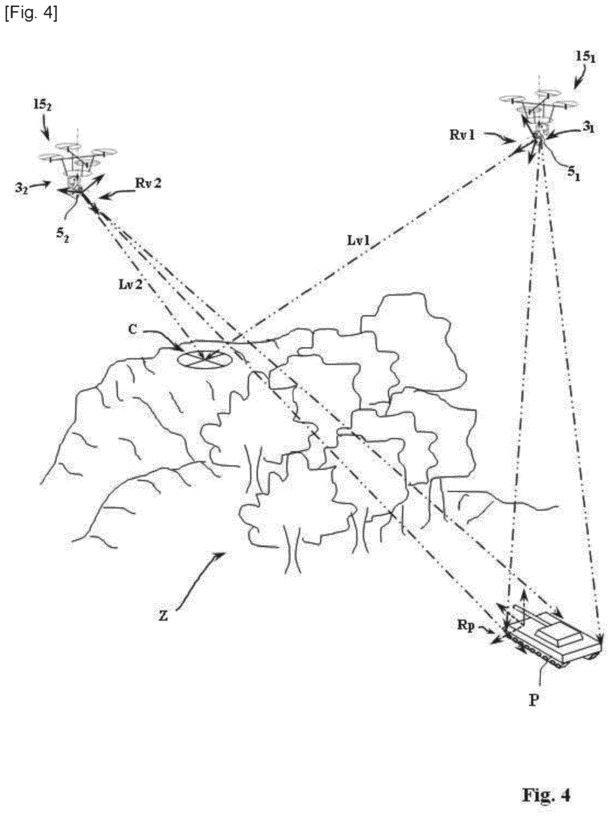

La figure 4 schématise un autre mode de réalisation d'une opération de triangulation permettant de localiser une cible C.

Conformément à ce mode la plateforme P met en œuvre deux drones à voilures tournantes 15₁ et 15₂ qui sont équipés chacun d'une nacelle 1 de pointage de cible telle que décrite précédemment.

Le premier drone 15₁ a son dispositif d'acquisition 3₁ qui est pointé en direction de la cible C et il transmet à la plateforme P la pose d'un premier repère de visée Rv1 qui est lié à son dispositif d'acquisition 3₁, pose déterminée dans le repère Rp de la plateforme P.

Comme dans le mode précédent, la pose est calculée grâce à l'observation de la plateforme P qui est faite à partir du moyen d'observation à 360° 5₁ qui équipe ce premier drone 15₁.

La plateforme P peut par ailleurs piloter un deuxième drone 15₂ disposé à distance du premier et dont le dispositif d'acquisition 3₂ est pointé en direction de la cible C. Ce deuxième drone 15₂ peut calculer la pose d'un deuxième repère de visée Rv2 grâce à l'observation de la plateforme P qui est faite à partir du moyen d'observation à 360° 5₂ qui équipe ce deuxième drone 15₂.

Il pourra donc transmettre à la plateforme P la pose du deuxième repère de visée Rv2 qui est lié à son dispositif d'acquisition 3₂, pose déterminée dans le repère Rp de la plateforme P.

Afin d'assurer la précision de la localisation de la cible, le premier drone 15₁ est verrouillé sur la cible C une fois celle-ci pointée. On a pour cela équipé le calculateur 13 de ce premier drone 15₁ d'une capacité de poursuite de cible (de tels algorithmes sont bien connus).

Il n'est donc pas nécessaire que l'utilisateur pointe simultanément les deux dispositifs d'acquisition 3₁ et 3₂. Il lui suffit de pointer le deuxième dispositif 3₂ après avoir accroché la cible avec le premier dispositif 3₁.

Là encore le dispositif selon l'invention permet de connaître géométriquement dans le même repère Rp les deux lignes de visée Lv1 et Lv2, il est donc possible de déterminer par triangulation les coordonnées du point d'intersection de ces deux lignes de visée, c'est-à-dire celles de la cible C dans le repère Rp.

Ce dispositif présente l'avantage de permettre la détermination des coordonnées d'une cible mobile. En effet cette dernière est poursuivie par le premier drone 15₁ pendant que le pointage est effectué avec le deuxième drone 15₂ (pointage qui peut aussi faire l'objet de la mise en place d'une poursuite de cible automatique).

La plateforme P dispose donc en temps réel des évolutions des deux lignes de visée Lv1 et Lv2, donc de la position de leur intersection, c'est-à-dire la localisation de la cible C au fil du temps.

Une conduite de tir de la plateforme peut exploiter ces informations sur la trajectoire de la cible C pour commander le tir d'un missile ou d'une munition tirée par un canon ou un mortier.

Comme décrit précédemment on pourra là encore visualiser en temps réel sur une interface de commande 17 la première ligne de visée Lv1 associée au premier drone pour faciliter le pointage de la seconde ligne de visée.

## Revendications

1. Procédé de pointage et d'acquisition de cible (C) pour une plateforme (P), procédé ***caractérisé* en ce que** :
- on met en œuvre au moins un drone (15) à voilure tournante, équipé d'une nacelle (1) portant un dispositif d'acquisition (3) qui est orientable en site et gisement par rapport au drone (15), le dispositif d'acquisition (3) comportant une caméra de pointage (4) qui peut être orientée vers une cible (C) lors de l'orientation du dispositif d'acquisition (3), drone et dispositif d'acquisition étant commandés à partir de la plateforme (P) ;
- on effectue au moins un pointage d'une cible (C) à partir de la caméra de pointage (4) ;
- on détermine la pose c'est-à-dire la localisation et l'orientation des axes d'un repère lié au dispositif d'acquisition, dit repère de visée Rv, dans un repère de référence Rp lié à la plateforme (P) ;
- la pose étant déterminée à l'aide d'un moyen d'observation (5) raccordé à un moyen de calcul (13), le moyen d'observation (5) étant lié rigidement à la caméra de pointage (4) et assurant une observation de l'espace avec une couverture angulaire de sensiblement 360° autour d'un axe de pointage de la caméra de pointage (4), le moyen d'observation (5) permettant d'observer la plateforme (P) au cours du pointage de la caméra de pointage (4), la pose étant déterminée par comparaison de la géométrie de la plateforme (P) avec au moins un modèle numérique en trois dimensions de cette plateforme, qui a été mis dans une mémoire du moyen de calcul (13) ;
- on transmet à la plateforme (P) à partir du drone (15) la ou les poses du dispositif d'acquisition (3) associées aux vidéos de pointage de la cible (C).

2. Procédé de pointage et d'acquisition de cible selon la revendication 1, procédé dans lequel on localise la cible (C) le long de la ou des directions de pointage (Lv) par une opération de télémétrie réalisée à l'aide d'un télémètre solidaire du dispositif d'acquisition.

3. Procédé de pointage et d'acquisition de cible selon la revendication 1, procédé dans lequel on localise la cible (C) le long de la ou des directions de pointage (Lv) par au moins une opération de triangulation.

4. Procédé de pointage et d'acquisition de cible selon la revendication 3, procédé dans lequel on réalise au moins une triangulation en donnant au moins deux positions (S1,S2) successives au drone (15), en réalisant un pointage de cible (C) pour chaque position et en envoyant à la plateforme (P) et pour chaque position (S1,S2) la pose du dispositif d'acquisition (3) dans le repère plateforme Rp, pose qui a été adoptée lors du pointage de cible considéré.

5. Procédé de pointage et d'acquisition de cible selon la revendication 3, procédé dans lequel on met en œuvre au moins deux drones à voilures tournantes (15₁,15₂), équipés chacun d'une nacelle portant un dispositif d'acquisition de cible (3₁,3₂) et dans lequel :
- on pointe la cible (C) à partir d'un premier drone (15₁), puis on transmet à la plateforme (P) la pose du premier dispositif d'acquisition (3₁) dans le repère de la plateforme Rp ;
- on pointe la même cible (C) à partir d'un deuxième drone (15₂), puis on transmet à la plateforme (P) la pose du deuxième dispositif d'acquisition (3₂) dans le repère de la plateforme Rp ;
- on réalise une triangulation permettant de localiser la cible (C) à partir des deux pointages de cible ainsi réalisés.

6. Procédé de pointage et d'acquisition de cible selon la revendication 5, procédé dans lequel des moyens de poursuite de cible sont intégrés à au moins un des drones (15₁,15₂), permettant le pointage d'une cible (C) par un seul utilisateur pilotant les deux drones (15₁,15₂).

7. Procédé de pointage et d'acquisition de cible selon une des revendications 4 à 6, procédé dans lequel on affiche en temps réel sur une interface Homme Machine (17) la ligne de visée (Lv1) d'un premier pointage réalisé.

8. Nacelle (1) de pointage et d'acquisition de cible permettant la mise en œuvre du procédé selon une des revendications précédentes, nacelle (1) destinée à être liée à une drone (15) à voilure tournante et comportant un dispositif d'acquisition (3) qui est destiné à pouvoir être orienté en site et en gisement par rapport au drone (15), le dispositif d'acquisition (3) comportant au moins une caméra de pointage (4) qui peut être orientée vers une cible (C) lors de l'orientation du dispositif d'acquisition (3), le dispositif d'acquisition (3) comportant également un moyen d'observation (5), lié rigidement à la caméra de pointage (4), et raccordé à un moyen de calcul (13), moyen d'observation (5) assurant une observation de l'espace avec une couverture angulaire de sensiblement 360° autour d'un axe (8) de pointage de la caméra de pointage (4), le moyen d'observation (5) étant destiné à observer la plateforme (P) au cours du pointage de la caméra de pointage (4), la géométrie de la plateforme (P) étant destinée à être comparée à au moins un modèle numérique en trois dimension de cette plateforme qui a été mis dans une mémoire du moyen de calcul (13), pour en déduire la pose du dispositif d'acquisition (3), c'est-à-dire la position et l'orientation des axes d'un repère lié au dispositif d'acquisition (3), dit repère de visée Rv, dans le repère Rp associé à la plateforme (P), nacelle (1) comportant également des moyens (14) permettant de transmettre à la plateforme (P) les vidéos issues de la caméra de pointage (4) et les informations de pose associées.

9. Nacelle selon la revendication 8, **caractérisée en ce qu'**elle comporte un plateau (2) permettant sa fixation à un drone (15), plateau (2) relié à un corps (6) par un premier moteur (7), le corps (6) étant relié au dispositif d'acquisition (3) par un deuxième moteur (9).

10. Nacelle selon une des revendications 8 ou 9, **caractérisé en ce que** le modèle numérique de plateforme (P) est un modèle articulé associant les modèles numériques d'au moins deux sous-ensembles de la plateforme, chaque sous-ensemble pouvant être orienté dans l'espace par rapport à l'autre sous-ensemble, l'orientation relative des différents sous-ensembles étant destinée à être transmise à la nacelle (1) par la plateforme (P).

11. Nacelle selon une des revendications 8 à 10, **caractérisée en ce qu'**elle comporte un télémètre solidaire du dispositif d'acquisition (3).

12. Dispositif de pointage et acquisition de cible permettant la mise en œuvre du procédé selon une des revendications 1 à 7, dispositif **caractérisé en ce qu'**il comporte au moins un drone (15) à voilure tournante, qui est équipé d'une nacelle (1) selon une des revendications 8 à 11.

13. Dispositif de pointage et acquisition de cible selon la revendication 12, dispositif **caractérisé en ce qu'**il comporte au moins deux drones à voilures tournantes (15₁,15₂) équipés chacun d'une nacelle (1) selon une des revendications 8 à 11, les drones (15₁,15₂) et leurs dispositifs d'acquisition (3₁,3₂) étant commandés à partir de la plateforme (P).

14. Dispositif de pointage et acquisition de cible selon la revendication 13, dispositif **caractérisé en ce qu'**au moins une nacelle (1) est équipée d'un dispositif de poursuite de cible (C).

## Patentansprüche

1. - Verfahren zur Zielanvisierung und -erfassung (C) für eine Plattform (P), wobei das Verfahren **dadurch gekennzeichnet ist, dass**:
- mindestens eine Drohne (15) mit Drehflügeln eingesetzt wird, die mit einer Gondel (1) ausgestattet ist, die eine Erfassungsvorrichtung (3) trägt, die in Elevation und Azimut im Verhältnis zur Drohne (15) ausrichtbar ist, wobei die Erfassungsvorrichtung (3) eine Anvisierungskamera (4) aufweist, die bei der Ausrichtung der Erfassungsvorrichtung (3) auf ein Ziel (C) gerichtet werden kann, wobei die Drohne und die Erfassungsvorrichtung von der Plattform (P) aus gesteuert werden;
- mindestens eine Anvisierung eines Ziels (C) von der Anvisierungskamera (4) aus durchgeführt wird;
- die Stellung, das heißt, die Lokalisierung und die Ausrichtung der Achsen eines mit der Erfassungsvorrichtung verbundenen Bezugsystems, bezeichnet als Zielbezugssystem Rv, in einem mit der Plattform (P) verbundenen Referenz-Bezugssystem Rp bestimmt wird;
- wobei die Stellung mit Hilfe eines Beobachtungsmittels (5) bestimmt wird, das mit einem Rechenmittel (13) verknüpft ist, wobei das Beobachtungsmittel (5) mit der Anvisierungskamera (4) starr verbunden ist und eine Beobachtung des Raums mit einer Winkelabdeckung von etwa 360° um eine Anvisierungsachse der Anvisierungskamera (4) sicherstellt, wobei das Beobachtungsmittel (5) erlaubt, die Plattform (P) während der Anvisierung durch die Anvisierungskamera (4) zu beobachten, wobei die Stellung durch Vergleich der Geometrie der Plattform (P) mit mindestens einem dreidimensionalen digitalen Modell dieser Plattform bestimmt wird, das in einem Speicher des Rechenmittels (13) gespeichert ist;
- die den Anvisierungsvideos des Ziels (C) zugeordneten Stellung(n) der Erfassungsvorrichtung (3) von der Drohne (15) aus an die Plattform (P) übertragen werden.

2. - Verfahren zur Zielanvisierung und -erfassung nach Anspruch 1, wobei bei dem Verfahren das Ziel (C) entlang der Anvisierungsrichtung(en) (Lv) anhand einer Telemetrieoperation lokalisiert wird, die mit Hilfe eines Telemeters durchgeführt wird, das mit der Erfassungsvorrichtung fest verbunden ist.

3. - Verfahren zur Zielanvisierung und -erfassung nach Anspruch 1, wobei bei dem Verfahren das Ziel (C) entlang der Anvisierungsrichtung(en) (Lv) anhand mindestens einer Triangulationsoperation lokalisiert wird.

4. - Verfahren zur Zielanvisierung und -erfassung nach Anspruch 3, wobei bei dem Verfahren mindestens eine Triangulation durchgeführt wird, indem der Drohne (15) mindestens zwei aufeinanderfolgende Positionen (S1, S2) gegeben werden, indem für jede Position eine Zielanvisierung (C) durchgeführt wird und indem an die Plattform (P) und für jede Position (S1, S2) die Stellung der Erfassungsvorrichtung (3) im Plattformbezugssystem Rp, die bei der entsprechenden Zielanvisierung eingenommen wurde, gesendet wird.

5. - Verfahren zur Zielanvisierung und -erfassung nach Anspruch 3, wobei bei dem Verfahren mindestens zwei Drohnen mit Drehflügeln (15₁, 15₂) eingesetzt werden, die jeweils mit einer Gondel ausgestattet sind, die eine Zielerfassungsvorrichtung (3₁, 3₂) trägt und bei dem:
- das Ziel (C) von einer ersten Drohne (15₁) aus anvisiert, dann an die Plattform (P) die Stellung der ersten Erfassungsvorrichtung (3₁) im Plattformbezugssystem Rp übertragen wird;
- dasselbe Ziel (C) von einer zweiten Drohne (15₂) aus anvisiert, dann an die Plattform (P) die Stellung der zweiten Erfassungsvorrichtung (3₂) im Plattformbezugssystem Rp übertragen wird;
- eine Triangulation durchgeführt wird, die erlaubt, das Ziel (C) auf der Basis der zwei derart durchgeführten Zielanvisierungen zu lokalisieren.

6. - Verfahren zur Zielanvisierung und -erfassung nach Anspruch 5, wobei bei dem Verfahren Zielverfolgungsmittel in mindestens eine der Drohnen (15₁, 15₂) integriert sind, die das Anvisieren eines Ziels (C) durch einen einzigen Benutzer erlauben, der die zwei Drohnen (15₁, 15₂) lenkt.

7. - Verfahren zur Zielanvisierung und -erfassung nach einem der Ansprüche 4 bis 6, wobei bei dem Verfahren in Echtzeit auf einer Mensch-Maschinen-Schnittstelle (17) die Visierlinie (Lv1) einer durchgeführten ersten Anvisierung angezeigt wird.

8. - Gondel (1) zur Zielanvisierung und - erfassung, die die Durchführung des Verfahrens nach einem der vorangehenden Ansprüche gestattet, wobei die Gondel (1) dazu bestimmt ist, mit einer Drohne (15) mit Drehflügeln verbunden zu sein und eine Erfassungsvorrichtung (3) trägt, die bestimmt ist, in Elevation und in Azimut im Verhältnis zur Drohne (15) ausrichtbar zu sein, wobei die Erfassungsvorrichtung (3) mindestens eine Anvisierungskamera (4) aufweist, die bei der Ausrichtung der Erfassungsvorrichtung (3) auf ein Ziel (C) gerichtet werden kann, wobei die Erfassungsvorrichtung (3) ebenfalls ein Beobachtungsmittel (5) aufweist, das mit der Anvisierungskamera (4) starr verbunden und mit einem Rechenmittel (13) verknüpft ist, wobei das Beobachtungsmittel (5) eine Beobachtung des Raums mit einer Winkelabdeckung von etwa 360° um eine Anvisierungsachse (8) der Anvisierungskamera (4) sicherstellt, wobei das Beobachtungsmittel (5) dazu bestimmt ist, die Plattform (P) während der Anvisierung durch die Anvisierungskamera (4) zu beobachten, wobei die Geometrie der Plattform (P) bestimmt ist, mit mindestens einem dreidimensionalen digitalen Modell dieser Plattform verglichen zu werden, das in einem Speicher des Rechenmittels (13) gespeichert ist, um daraus die Stellung der Erfassungsvorrichtung (3), das heißt, die Position und die Ausrichtung der Achsen eines mit der Erfassungsvorrichtung (3) verbundenen Bezugssystems, bezeichnet als Zielbezugssystem Rv, in dem der Plattform (P) zugeordneten Bezugssystem Rp abzuleiten, wobei die Gondel (1) ebenfalls Mittel (14) aufweist, die erlauben, an die Plattform (P) die Videos aus der Anvisierungskamera (4) und die zugehörigen Stellungsinformationen zu übertragen.

9. - Gondel nach Anspruch 8, **dadurch gekennzeichnet, dass** sie eine Platte (2) aufweist, die ihre Befestigung an einer Drohne (15) gestattet, wobei die Platte (2) durch einen ersten Motor (7) mit einem Körper (6) verbunden ist, wobei der Köper (6) durch einen zweiten Motor (9) mit der Erfassungsvorrichtung (3) verbunden ist.

10. - Gondel nach einem der Ansprüche 8 oder 9, **dadurch gekennzeichnet, dass** das digitale Modell der Plattform (P) ein Scharniermodell ist, das die digitalen Modelle von mindestens zwei Unteranordnungen der Plattform kombiniert, wobei jede Unteranordnung im Raum im Verhältnis zu der anderen Unteranordnung ausrichtbar ist, wobei die relative Ausrichtung der verschiedenen Unteranordnungen bestimmt ist, von der Plattform (P) an die Gondel (1) übertragen zu werden.

11. - Gondel nach einem der Ansprüche 8 bis 10, **dadurch gekennzeichnet, dass** sie ein Telemeter aufweist, das mit der Erfassungsvorrichtung (3) fest verbunden ist.

12. - Vorrichtung zur Zielanvisierung und - erfassung, die die Durchführung des Verfahrens nach einem der Ansprüche 1 bis 7 gestattet, wobei die Vorrichtung **dadurch gekennzeichnet ist, dass** sie mindestens eine Drohne (15) mit Drehflügeln aufweist, die mit einer Gondel (1) nach einem der Ansprüche 8 bis 11 ausgestattet ist.

13. - Vorrichtung zur Zielanvisierung und - erfassung nach Anspruch 12, wobei die Vorrichtung **dadurch gekennzeichnet ist, dass** sie mindestens zwei Drohnen mit Drehflügeln (15₁, 15₂) aufweist, die jeweils mit einer Gondel (1) nach einem der Ansprüche 8 bis 11 ausgestattet sind, wobei die Drohnen (15₁, 15₂) und ihre Erfassungsvorrichtungen (3₁, 3₂) von der Plattform (P) aus gesteuert werden.

14. - Vorrichtung zur Zielanvisierung und - erfassung nach Anspruch 13, wobei die Vorrichtung **dadurch gekennzeichnet ist, dass** mindestens eine Gondel (1) mit einer Vorrichtung zur Verfolgung des Ziels (C) ausgestattet ist.

## Claims

1. - A method for targeting and acquiring a target (C) for a platform (P), the method being **characterised in that**:
- at least one rotary-wing drone (15) is implemented, equipped with a nacelle (1) carrying an acquisition device (3) that can be oriented in elevation and relative bearing relative to the drone (15), the acquisition device (3) including a target camera (4) that can be oriented toward a target (C) during the orientation of the acquisition device (3), the drone and the acquisition device being controlled from the platform (P);
- a target (C) is targeted at least once from the target camera (4);
- the pose, that is to say the location and the orientation of the axes of a frame linked to the acquisition device, called target frame Rv, in a reference frame Rp linked to the platform (P), is determined;
- the pose being determined using an observation means (5) connected to a computing means (13), the observation means (5) being rigidly linked to the target camera (4) and ensuring an observation of the space with an angular coverage of substantially 360° about a target axis of the target camera (4), the observation means (5) allowing observation of the platform (P) during targeting of the target camera (4), the pose being determined by comparing the geometry of the platform (P) with at least one three-dimensional digital model of this platform, which has been placed in a memory of the computing means (13);
- the pose(s) of the acquisition device (3) associated with the target videos of the target (C) are sent to the platform (P) from the drone (15).

2. - The method for targeting and acquiring a target according to claim 1, in which method the target (C) is located along the target direction(s) (Lv) by a telemetry operation performed using a telemeter secured to the acquisition device.

3. - The method for targeting and acquiring a target according to claim 1, in which method the target (C) is located along the target direction(s) (Lv) by at least one triangulation operation.

4. - The method for targeting and acquiring a target according to claim 3, in which method at least one triangulation is done by giving at least two successive positions (S1, S2) to the drone (15), by performing targeting of the target (C) for each position and by sending to the platform (P), and for each position (S1, S2), the pose of the acquisition device (3) in the platform frame Rp, which pose has been adopted during the targeting of the considered target.

5. - The method for targeting and acquiring a target according to claim 3, in which method at least two rotary-wing drones (15₁, 15₂) are implemented, each equipped with a nacelle carrying a target acquisition device (3₁, 3₂), and wherein:
- the target (C) is targeted from a first drone (15₁), then the pose of the first acquisition device (3₁) in the platform frame Rp is sent to the platform (P);
- the same target (C) is targeted from a second drone (15₂), then the pose of the second acquisition device (3₂) in the platform frame Rp is sent to the platform (P);
- a triangulation is done allowing to locate the target (C) from the two targeting operations of the target thus done.

6. - The method for targeting and acquiring a target according to claim 5, in which method target tracking means are integrated into at least one of the drones (15₁, 15₂), allowing a target (C) to be targeted by a single user piloting both drones (15₁, 15₂).

7. - The method for targeting and acquiring a target according to one of claims 4 to 6, in which method the line of sight (Lv1) of a first performed targeting is displayed in real-time on a man-machine interface (17).

8. - A nacelle (1) for targeting and acquiring a target, allowing the implementation of the method according to one of the preceding claims, which nacelle (1) is intended to be connected to a rotary-wing drone (15) and includes an acquisition device (3) that can be oriented in elevation and relative bearing relative to the drone (15), the acquisition device (3) including at least one target camera (4) that can be oriented toward a target (C) during the orientation of the acquisition device (3), the acquisition device (3) also including an observation means (5), rigidly connected to the target camera (4), and connected to a computing means (13), which observation means (5) ensures observation of the space with an angular coverage of substantially 360° about a target axis (8) of the target camera (4), the observation means (5) being intended to observe the platform (P) during the targeting of the target camera (4), the geometry of the platform (P) being intended to be compared to at least one three-dimensional digital model of this platform that has been placed in a memory of the computing means (13), to deduce therefrom the pose of the acquisition device (3), that is to say the position and the orientation of the axes of the frame linked to the acquisition device (3), called target frame Rv, in the frame Rp associated with the platform (P), the nacelle (1) also including means (14) allowing the videos from the target camera (4) and the associated pose information to be transmitted to the platform (P).

9. - The nacelle according to claim 8, **characterised in that** it includes a plate (2) allowing it to be attached to a drone (15), the plate (2) being connected to a body (6) by a first motor (7), the body (6) being connected to the acquisition device (3) by a second motor (9).

10. - The nacelle according to one of claims 8 or 9, **characterised in that** the digital model of the platform (P) is an articulated model associating the digital models of at least two subassemblies of the platform, each subassembly being able to be oriented in space relative to the other subassembly, the relative orientation of the different subassemblies being intended to be transmitted to the nacelle (1) by the platform (P).

11. - The nacelle according to one of claims 8 to 10, **characterised in that** it includes a telemeter secured to the acquisition device (3).

12. - A device for targeting and acquiring a target, allowing the implementation of the method according to one of claims 1 to 7, the device being **characterised in that** it includes at least one rotary-wing drone (15) that is equipped with a nacelle (1) according to one of claims 8 to 11.

13. - The device for targeting and acquiring a target according to claim 12, the device being **characterised in that** it includes at least two rotary-wing drones (15₁, 15₂) each equipped with a nacelle (1) according to one of claims 8 to 11, the drones (15₁, 15₂) and their acquisition devices (3₁, 3₂) being controlled from the platform (P).

14. - The device for targeting and acquiring a target according to claim 13, the device being **characterised in that** at least one nacelle (1) is equipped with a target tracking device (C).
